# EUROPEAN PATENT SPECIFICATION

(11) **EP 3 434 904 B1**
(45) Date of publication and mention of the grant of the patent: **23.02.2022**
(21) Application number: 18185208.8
(22) Date of filing: 24.07.2018
(51) Int. Cl.: F04D 9/00, F04D 29/22, F04D 29/24, B64D 37/00, F04D 31/00, B01D 19/00

(54) **HYDROCARBON FUEL SYSTEM**
KOHLENWASSERSTOFFBRENNSTOFFSYSTEM
SYSTÈME DE CARBURANT D'HYDROCARBURE

(30) Priority: 24.07.2017 US 201715657727
(43) Date of publication of application: 30.01.2019
(73) Proprietor: Hamilton Sundstrand Corporation, Charlotte, NC 28217-4578 (US)
(72) Inventor: WELCH, Brian M., West Hartford, CT 06110 (US); RHEAUME, Jonathan, West Hartford, CT 06119 (US); CORDATOS, Haralambos, Colchesster, CT 06415 (US); SANGIOVANNI, Joseph J., West Suffield, CT 06093 (US)
(74) Representative: Dehns

(56) References cited:
- WO-A1-2016/121659
- GB-A- 735 866
- JP-B2- 5 133 556
- US-A- 2 575 923
- US-A1- 2007 006 591
- US-A1- 2008 099 618
- US-A1- 2013 047 845
- US-A1- 2017 175 639
- US-B1- 6 315 815
- US-B1- 6 629 821

## Description

### BACKGROUND

The subject matter disclosed herein generally relates to hydrocarbon fuel processing and delivery, and more particularly to removal of dissolved gases from a hydrocarbon fuel stream.

Hydrocarbon fuels can be thermodynamically characterized as high-energy, low-entropy materials, and are utilized for their characteristic of being chemically unstable under certain conditions so that the fuel readily reacts with atmospheric oxygen in a highly exothermic combustion reaction. Liquid hydrocarbon fuels are typically prepared through the chemical refining of crude oil. However, liquid hydrocarbon fuels can contain substances other than the moderately short-chain hydrocarbons that make up the bulk of the liquid fuel. For example, they can contain dissolved contaminants or by-products from the refining process. Other contaminants such as dissolved gases can be introduced to the liquid fuel through contact with gases (e.g. the surrounding atmosphere) during storage or transportation. Contaminants such as dissolved gases can cause performance problems for fuel system or engine operation and components, and although various technologies have been proposed for removing gases from fuels, new approaches continue to be sought. Fuel systems are known from US 2,575,923, GB 735,866, WO 2016/121659 and US 6,629,821.

### BRIEF DESCRIPTION

The present invention relates to a fuel system as defined by claim 1.

In some embodiments, the vacuum connection is disposed at a radially central location along a first end of the inner cylindrical cavity closer to the axial position of the inlet than to the axial position of the outlet.

In some embodiments, the gas separation pump further comprises a third impeller at an axial position between the inlet and the first end of the inner cylindrical cavity.

In some embodiments, the vacuum connection is disposed at a second end of the inner cylindrical cavity closer to the axial position of the outlet than the axial position of the fluid inlet.

In some embodiments, the fuel system further comprises a vacuum device in fluid communication with the vacuum connection, either integrated with or external to the gas separation pump, on a common rotor with the first and second impellers.

In some embodiments, the vacuum device comprises a vacuum ejector in fluid communication with the vacuum connection.

In some embodiments, the gas separation pump inlet further comprises an orifice or Venturi tube.

In some embodiments, the fuel system further comprises an inert gas source in fluid communication with an ullage space in the fuel tank.

In some embodiments, the inert gas source comprises a catalytic reactor that combusts fuel vapor to form carbon dioxide and water.

In some embodiments, the fuel system is configured to control a vacuum pressure at the vacuum connection based on temperature of the liquid hydrocarbon fuel.

Also disclosed is an engine fueling system comprising the fuel system of any one or combination of the above embodiments and an engine that receives fuel from the hydrocarbon fuel flow path.

In some embodiments, the engine fueling system further comprises a scavenge pump on the hydrocarbon fluid flow path between the fuel tank and the gas separation pump inlet, wherein fuel flow output from the gas separation pump or a boost pump provides motive force to the scavenge pump.

In some embodiments, the thermal management system of the engine fueling system is a heat exchanger comprising a heat absorption side on the hydrocarbon fuel flow path and a heat rejection side in thermal communication with a heat source.

In some embodiments, the engine comprises a gas turbine aircraft engine, and the heat source comprises engine lubricating oil.

### BRIEF DESCRIPTION OF THE DRAWINGS

The following descriptions should not be considered limiting in any way. With reference to the accompanying drawings, like elements are numbered alike:
FIG. 1 is a schematic depiction of an example embodiment of a fuel system;
FIG. 2 is a schematic depiction of another example embodiment of a fuel system;
FIG. 3 is a schematic depiction of an example embodiment of a gas separation pump;
FIG. 4 is a schematic depiction of another example embodiment of a gas separation pump;
FIG. 5 is a schematic depiction of an example embodiment of a gas separation pump with an integrated vacuum source;
FIG. 6 is a schematic depiction of an example embodiment of a gas separation pump and an external vacuum source;
FIG. 7 is a schematic depiction of an example embodiment of a gas separation pump and an external ejector; and
FIG. 8 is a schematic depiction of a gas separation pump with an uneven surface in an impeller sweep zone of a fuel system according to the invention.

### DETAILED DESCRIPTION

A detailed description of one or more embodiments of the disclosed fuel system is presented herein by way of exemplification and not limitation with reference to the Figures.

Various embodiments of the present disclosure are related to the removal of dissolved gaseous species (e.g. oxygen, carbon dioxide, water vapor, etc.) from fuel. In some embodiments, for example, hydrocarbon fuel can serve as a heat sink on aircraft or other vehicles by absorbing heat from an engine, engine accessories, and other heat loads. At high temperature, however, the fuel can react with dissolved oxygen to form solid carbonaceous deposits ("varnish" or "lacquering") in fuel passages. The deposits can foul surfaces for heat exchange and clog fuel system components. When fuel is heated above approximately 121°C (250°F), the increased rate of these auto-oxidation reactions can shorten typical fuel system maintenance intervals. Further, water in fuel can also be problematic because water degrades the heating value of fuel. Water can also freeze in the fuel system and block fuel flow. Water can also allow microorganisms to grow in fuel that can occlude flow of fuel and whose metabolic byproducts contribute to corrosion of fuel system components. Additionally, carbon dioxide in fuel may also be problematic. Carbon dioxide in fuel can cause vapor lock or fuel pump cavitation under certain conditions. Vapor lock is the undesired presence of gases and vapors in the fuel system that can adversely affect delivery of fuel to the engine. Carbon dioxide and water can get into fuel through exposure to the environment, or in some embodiments through fuel tank inerting systems that provide a nonflammable gas by catalytic combustion to form carbon dioxide and water, which can present a risk of vapor lock or cavitation when dissolved in fuel. Many approaches for removing dissolved gases from hydrocarbon fuels have utilized selective membranes that can have high bulk and weight and limited durability. This disclosure seeks to address the issue of dissolved gases in fuel with embodiments that can be used as an alternative to or in combination with other gas removal technologies such as selective membranes. However, the present invention is solely defined by the appended claims.

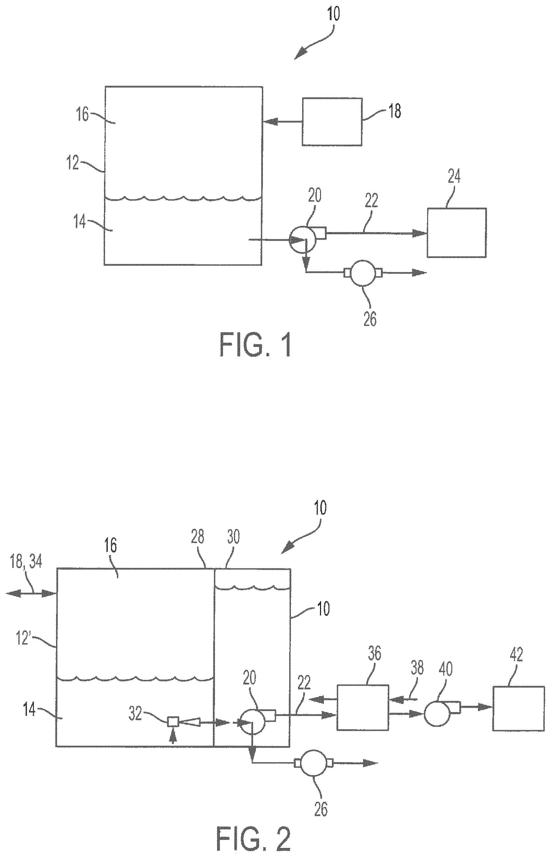

With reference now to the Figures, FIGS. 1 and 2 schematically show example embodiments of a fuel system 10. The fuel system 10 includes fuel tank 12 that contains liquid hydrocarbon fuel 14 and a vapor or ullage space 16. In some embodiments, an optional non-flammable gas system 18 can provide non-flammable gas to the fuel tank ullage space 16. A gas separation pump 20 receives the liquid hydrocarbon fuel 14 from the fuel tank 12 and removes dissolved gas(es) from the liquid fuel, sending the degassed fuel to fuel system delivery outlet 22. As shown in FIG. 1, the gas separation pump 20 is located outside of the fuel tank 12, but it can also be located in the tank, either submerged in the fuel 14 (see, e.g., FIG. 2) or above or partially submerged in the fuel 14 with a submerged inlet feed line (not shown). As shown in FIG. 1, the fuel system delivery outlet 22 delivers fuel to a fuel delivery target 24, which can be an engine, another fuel tank (e.g., pumping from a fuel storage tank to a vehicle on-board fuel tank), or a fuel processing system. According to the invention, the fuel delivery target 24 is a thermal management system (TMS) that heats the fuel. Gas(es) removed from the liquid fuel 14 are exhausted through a vacuum pump 26. In some embodiments, the fuel tank 14, the gas separation pump 20, and the fuel delivery target (e.g., engine, TMS) can all be vehicle on-board components. As used herein, the term "vehicle" means any transportation device, including automobiles, rail, marine, aircraft, or other transport vehicles. In some embodiments, the components can be part of an on-board aircraft fuel system.

An example embodiment of an on-board aircraft fuel system is schematically shown in FIG. 2. As shown in FIG. 2, fuel in aircraft wing fuel tank 12' is pumped from a main tank section 28 to a collector cell 30 by a scavenge pump 32. Vent system 34 allows for gas outflow and inflow during aircraft ascent and descent and to accommodate for fuel consumption, and can also be integrated with a non-flammable gas system 18. In some embodiments, the scavenge pump 32 can be an ejector-style pump that relies on fluid flow from a fluid flow source such as a connection (not shown) to the output of a fuel booster pump such as booster pump 40 referenced below. The fuel separation pump 20 is shown submerged in the fuel 14 in collector cell 30, and outputs degassed fuel through the fuel system delivery outlet 22 to a thermal management system 36. The thermal management system 36 is represented schematically as a heat exchanger with the degassed fuel on its heat absorption side and aircraft engine lubricating oil 38 on its heat rejection side (oil connection to engine not shown), but could be another heat source that rejects heat to the fuel such as a bleed air cooler or engine structural components that need cooling. Heated fuel exiting from the thermal management system 36 can be recycled to the fuel tank 12 or directed to booster pump 40, which boosts the pressure of the liquid fuel for delivery to a fuel inlet of aircraft engine 42 (e.g., a gas turbine engine). In another example embodiment, the gas separating pump can be configured as the booster pump.

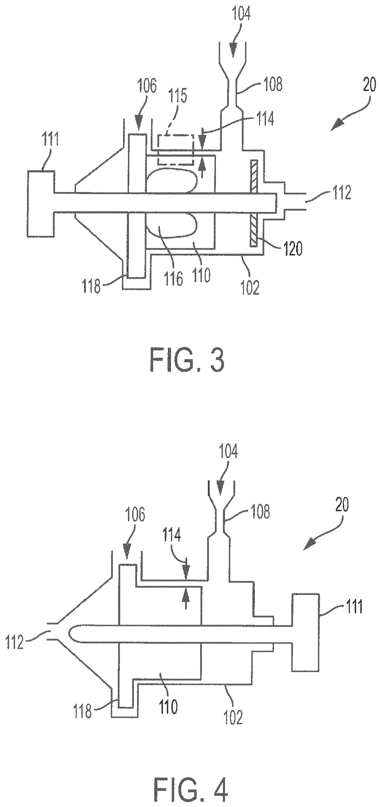

With reference now to FIGS. 3-4, example embodiments of a gas separation pump 20 are schematically shown. As shown in FIGS. 3-4, the gas separation pump 20 comprises a cylindrical pump housing 102 that includes an inlet 104 and an outlet 106. In some embodiments, the inlet 104 can optionally include an orifice or Venturi structure 108, which can provide a pressure drop to promote the formation of gas bubbles coming out of solution with the liquid hydrocarbon fuel. A first impeller 110 comprising one or more axially-extending blades is shown radially mounted on a rotor 111, which can have its own motor as shown or can be attached to another rotary drive chain such as an aircraft engine gearbox or an APU. During operation, the first impeller 110, which can also be referred to as an inducer or an inducer impeller pushes the liquid fuel radially outward toward the inner wall of the cylindrical pump housing 102. Concurrently with the action of the inducer directing liquid fuel radially outward, a vacuum is drawn at vacuum connection (i.e., vacuum port) 112 to promote formation of a low pressure space radially inward from the radially outwardly disposed liquid fuel. As the impeller 110 rotates, its radially-outward edge sweeps across the inner wall, promoting the formation of a liquid film in the gap 114. A body of liquid fuel with entrained gas can rotate along within the space between the blades of impeller 110 radially inward from the gap 114 and radially outward from the axially extending radially central (i.e., toward the axis) low pressure space. In some embodiments, such as shown in FIG. 3, the blades of the first impeller 110 can include one or more cutouts 116, for example at a radially central location on the blade that sweeps through the radially central low pressure space. A second impeller 118 connected to the rotor 111 ejects degassed liquid fuel radially through outlet 106 and provides motive force for the transport of fuel axially through the pump. In some embodiments, the first impeller 110 can comprise one or more axially-extending flat blades radially disposed to rotate in the in the cylindrical pump housing 102, and the second impeller 118 can comprise a plurality of vanes (not shown) configured to direct liquid fuel radially outward through the outlet 106. In some embodiments, the first impeller 110 can comprise one or more helical impeller configured to transport the fuel axially along the inside of housing 102. In some embodiments, the second impeller 118 can be a separate structure from the first impeller 106 as shown in FIG. 3. In some embodiments, the second impeller 118 can be structurally integrated with the first impeller 106 as shown in FIG. 4.

FIG. 4 schematically shows a gas separation pump with similar features and numbering as shown for FIG. 3. FIGS. 1 and 2 differ primarily in the location of the vacuum connection 112, with FIG. 3 having the radially central vacuum connection disposed axially remote from the outlet 106 so that the vacuum pulls in the opposite axial direction as the liquid flow, and FIG. 4 having the vacuum connection disposed on same end as outlet 106 so that the vacuum pulls in the same axial direction as the liquid flow. The pump can also include an optional third impeller 120 (FIG. 3) on the rotor 111 to inhibit liquid from being evacuated through the vacuum connection 112 and re-direct such liquid radially outward on a flow path toward the outlet 106. The second impeller can perform this function in the embodiment of FIG. 4 because of its proximity to the vacuum connection 112.

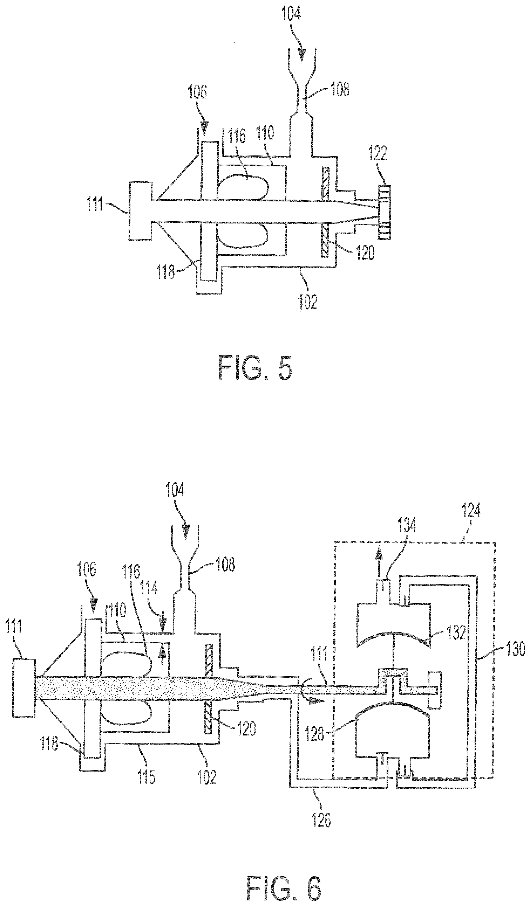

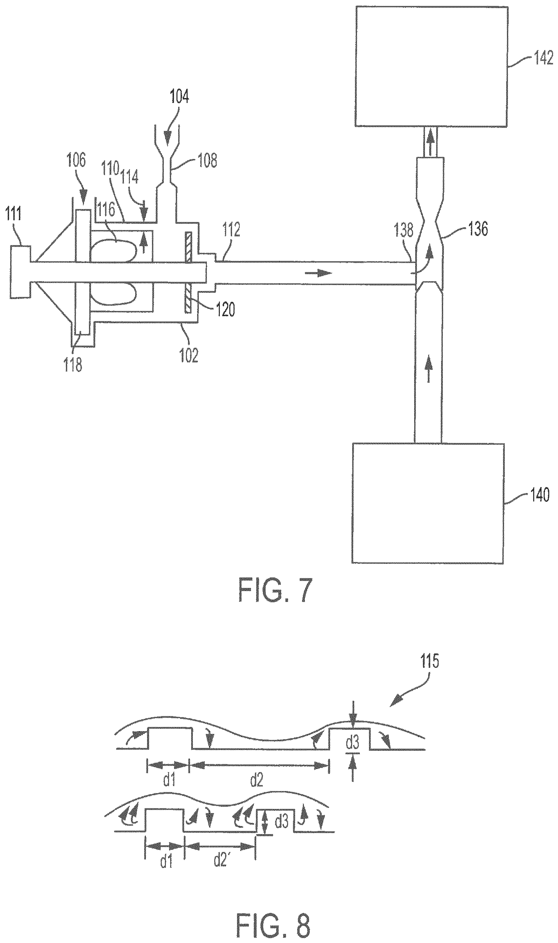

Various types of vacuum devices can be used as the vacuum pump 26. For example, in some embodiments a rotary vane vacuum pump can be used as vacuum pump 26. In some embodiments, a vacuum can be generated by a vacuum generation device as described in US patent application Serial No. 15/587,669 entitled "Vacuum Systems for Degassing of Liquid Hydrocarbon Fuels". In some embodiments, the vacuum pump 26 can be integrated with the gas separation pump 20, and in some embodiments, the vacuum pump 26 can be external to the gas separation pump 20. In some embodiments, the vacuum pump can be on or powered by the same rotor as the impellers of the gas separation pump 20. FIGS. 5-7 schematically show example embodiments of gas separation pumps integrated with vacuum devices. FIG. 5 shows an integrated vacuum pump 122 (exhaust not shown) such as a rotary vane vacuum pump or a scroll vacuum pump that is mounted on the same rotor 111 as the impellers 110, 118, and 120. FIG. 6 shows an external vacuum pump 124 such as a diaphragm pump with multiple heads that shares the same power train (rotor 111) as the gas separation pump 20. Vacuum is drawn through conduit 126 by a first diaphragm 128, and a second diaphragm 130 draws vacuum from the first diaphragm 128 through conduit 132, which exhausts through exhaust port 134. The two vacuum stages are configured in series for deeper vacuum; parallel configuration for higher flow is also envisioned. FIG. 7 schematically shows an external vacuum ejector 136 comprising a suction port 138 in fluid communication with the degassing pump vacuum connection 112. A motive fluid from a high pressure fluid source 140 (e.g., bleed air) provides motive force to draw a vacuum at vacuum port 138 through the Venturi effect. The motive fluid exits the vacuum ejector 136 to motive fluid sink 142, which can be an on-board system that uses the motive fluid or an external exhaust. It should be noted that FIG. 7 shows a single stage ejector, but that multi-stage ejectors where the motive fluid exiting the ejector is directed to a vacuum port of another downstream ejector are also envisioned. A vacuum ejector can also be connected in series with a vacuum pump such as a rotary vane, scroll, or diaphragm vacuum pump.

As mentioned above, some embodiments can provide a technical effect of removing dissolved gases from liquid hydrocarbon fuel. In some embodiments, the processing of liquid hydrocarbon fuel for removal of dissolved gases can be promoted in various ways. For example, in some embodiments, features can be included in the gas separation pump 20 to enhance mass transfer for the evolution of gases such as oxygen, nitrogen, and carbon dioxide in the region where the inducer impeller sweeps along the inner wall of the pump housing 102. According to the invention, such features include an uneven surface on the pump housing inner wall and on the blade edge of the inducer impeller. These features are shown in FIG. 8, which schematically represents a magnified view of the region 115 of the gas separation pump 20 from FIG. 3. As shown in FIG. 8, variations on a textured surface show a rectangular notch pattern. Straight rib-like structures with sharp edges such as those shown in FIG. 8 can promote the formation of eddy currents in the liquid shown flowing over the uneven surface, which can promote mass transfer for oxygen evolution. By varying the relative dimensions d1, d2, and d3 shown in FIG. 8, the skilled person can implement structures to promote the formation of eddy currents. For example, as shown in the example embodiment of FIG. 8, shortening the dimension d2 to d2' increases the eddy currents. Other configurations can be implemented by the skilled person depending on the specific operational parameters involved within the scope of the present invention which is solely defined by the appended claims.

In some embodiments, the level of vacuum can be varied. A deep vacuum can generally promote evolution of gas from the liquid fuel, but increased levels of vacuum can also promote evaporation of lighter fractions (lower molecular weight hydrocarbons) in the fuel and can lead to pump cavitation. Although any fuel lost to the vacuum exhaust can be recaptured downstream by a condenser or a reverse selective membrane, it can be beneficial in some embodiments to control the vacuum level to inhibit fuel loss. A vacuum level of about 50 torr absolute pressure can removed dissolve gases in liquid hydrocarbon fuel at 50°C without excessive fuel evaporation, but may be less effective at lower temperatures. However, the vapor pressures of the liquid hydrocarbon fractions are also reduced at lower temperatures, so that a deeper vacuum can be drawn at lower temperatures without excessive fuel evaporation. In some embodiments, the fuel system is configured to operate (e.g., includes a controller configured to operate the system) to vary the vacuum pressure based on the fuel temperature. In some embodiments, the fuel system is configured to operate (e.g., includes a controller configured to operate the system) to reduce the vacuum pressure with reduced temperature and to increase the vacuum pressure with increased temperature. Increasing the residence time of the liquid hydrocarbon fuel in the pump can promote evolution of dissolved gases from the liquid fuel. In some embodiments, the pump can be configured and operated to provide a minimum residence time of at least 5 milliseconds (ms), or at least 25 ms, or at least 250 ms for fuel at room temperature. These range endpoints can be independently combined to form a number of ranges, and each possible range is hereby explicitly disclosed.

In some embodiments, the gas separation pump can be outfitted with seals and other materials that are compatible with hydrocarbon fuels. For example, seal materials can be a fluoropolymer elastomer or a fluorosilicone rubber. Aluminum for the pump housing and rotors is compatible with kerosene-based fuels such as aviation fuel Jet A-1. In some embodiments, copper conduits should be avoided, as should brass fittings because they can catalyze the auto-oxidation reactions of dissolved oxygen in the fuel. Seals and materials should not only be chemically compatible with fuel, they should also be compatible with temperature in which in which the gas separation pump is subjected to subfreezing temperatures during the cold soak condition. For example, some commercially available fluoroelastomer materials are compatible with a wide range of temperatures from -50°C to +200°C.

The terminology used herein is for the purpose of describing particular embodiments only and is not intended to be limiting of the present disclosure. As used herein, the term "about" is intended to include the degree of error associated with measurement of the particular quantity based upon the equipment available at the time of filing the application. For example, "about" can include a range of ± 8% or 5%, or 2% of a given value. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present invention as defined by the claims. In addition, many modifications may be made to adapt a particular situation or material to the teachings of the present disclosure without departing from the scope of the claims. Therefore, it is intended that the present invention not be limited to the particular embodiment disclosed as the best mode contemplated for carrying out this present disclosure, but that the present invention will include all embodiments falling within the scope of the claims.

## Claims

1. A fuel system (10) comprising
a fuel tank (12) containing hydrocarbon fuel (14);
a hydrocarbon fuel flow path in fluid communication with the fuel tank;
a gas separation pump (20) disposed on the flow path, comprising:
a pump housing (102) comprising an inner wall defining a cylindrical internal cavity, said pump housing comprising an inlet (104) at a first axial position along the cylindrical cavity outer circumference, an outlet (106) at a second axial position along the cylindrical cavity outer circumference, and a vacuum connection (112) in fluid communication with the cylindrical cavity axis;
a first impeller (110) axially disposed between the inlet and the outlet, said first impeller comprising an outer edge configured to sweep along the inner wall;
a second impeller (118) axially disposed between the first impeller and the outlet, said second impeller configured to eject liquid through the fluid outlet; and **characterized by**
a thermal management system (24, 36) configured to heat the fuel;
a fuel system delivery outlet (22) configured to receive a degassed fuel from the gas separation pump and to deliver it to the thermal management system;
the inner wall including a plurality of uneven surface features; the outer edge of the first impeller including a plurality of straight, rib-like structures with sharp edges having a rectangular notch pattern in an axial cross-section, and
the plurality of rib-like structures being received in the uneven surface features of the inner wall.

2. The fuel system of claim 1, wherein the vacuum connection (112) is disposed at a radially central location along a first end of the inner cylindrical cavity closer to the axial position of the inlet than to the axial position of the outlet.

3. The fuel system of claim 2, wherein the gas separation pump (20) further comprises a third impeller (120) at an axial position between the inlet and the first end of the inner cylindrical cavity.

4. The fuel system of any preceding claim, wherein the vacuum connection is disposed at a second end of the inner cylindrical cavity closer to the axial position of the outlet than the axial position of the fluid inlet.

5. The fuel system of any preceding claim, further comprising a vacuum device (136) in fluid communication with the vacuum connection, either integrated with or external to the gas separation pump, on a common rotor with the first and second impellers.

6. The fuel system of claim 5, wherein the vacuum device comprises a vacuum ejector (136) in fluid communication with the vacuum connection.

7. The fuel system of any of preceding claim, wherein the gas separation pump inlet further comprises an orifice or Venturi tube (108).

8. The fuel system of any preceding claim, further comprising an inert gas source in fluid communication with an ullage space (16) in the fuel tank.

9. The fuel system of claim 8, wherein the inert gas source comprises a catalytic reactor that combusts fuel vapor to form carbon dioxide and water.

10. The fuel system of any preceding claim, wherein the fuel system is configured to control a vacuum pressure at the vacuum connection based on temperature of the liquid hydrocarbon fuel.

11. An engine fueling system comprising the fuel system (10) of any preceding claim and an engine (42) that receives fuel from the hydrocarbon fuel flow path.

12. The engine fueling system of claim 11, further comprising a scavenge pump (32) on the hydrocarbon fluid flow path between the fuel tank and the gas separation pump inlet, wherein fuel flow output from the gas separation pump or a boost pump provides motive force to the scavenge pump.

13. The engine fueling system of claim 12, wherein the thermal management system is a heat exchanger (36) comprising a heat absorption side on the hydrocarbon fuel flow path and a heat rejection side in thermal communication with a heat source.

14. The engine fueling system of claim 13, wherein the engine comprises a gas turbine aircraft engine, and the heat source comprises engine lubricating oil.

## Patentansprüche

1. Brennstoffsystem (10), umfassend
einen Brennstofftank (12), der Kohlenwasserstoffbrennstoff (14) enthält;
einen Kohlenwasserstoffbrennstoff-Strömungspfad in Fluidverbindung mit dem Brennstofftank;
eine Gasabscheidungspumpe (20), die an dem Strömungspfad angeordnet ist, umfassend:
ein Pumpengehäuse (102), das eine Innenwand umfasst, die einen zylindrischen Innenhohlraum definiert, wobei das Pumpengehäuse einen Einlass (104) an einer ersten axialen Position entlang des Außenumfangs des zylindrischen Hohlraums, einen Auslass (106) an einer zweiten axialen Position entlang des Außenumfangs des zylindrischen Hohlraums und eine Vakuumverbindung (112) in Fluidverbindung mit der Achse des zylindrischen Hohlraums umfasst;
ein erstes Flügelrad (110), das axial zwischen dem Einlass und dem Auslass angeordnet ist, wobei das erste Flügelrad eine Außenkante umfasst, die dazu konfiguriert ist, an der Innenwand entlangzustreifen;
ein zweites Flügelrad (118), das axial zwischen dem ersten Flügelrad und dem Auslass angeordnet ist, wobei das zweite Flügelrad dazu konfiguriert ist, Flüssigkeit durch den Fluidauslass auszustoßen; und **gekennzeichnet durch**
ein Wärmemanagementsystem (24, 36), das dazu konfiguriert ist, den Brennstoff zu erwärmen;
einen Brennstoffsystem-Abgabeauslass (22), der dazu konfiguriert ist, einen entgasten Brennstoff von der Gasabscheidungspumpe aufzunehmen und diesen an das Wärmemanagementsystem abzugeben;
wobei die Innenwand eine Vielzahl von ungleichmäßigen Flächenmerkmalen beinhaltet;
wobei die Außenkante des ersten Flügelrads eine Vielzahl von geraden rippenartigen Strukturen mit scharfen Kanten, die ein rechteckiges Einkerbungsmuster in einem axialen Querschnitt aufweisen, beinhaltet, und
wobei die Vielzahl von rippenartigen Strukturen in den ungleichmäßigen Flächenmerkmalen der Innenwand aufgenommen ist.

2. Brennstoffsystem nach Anspruch 1, wobei die Vakuumverbindung (112) an einer radial zentralen Stelle entlang eines ersten Endes des zylindrischen Innenhohlraums näher an der axialen Position des Einlasses als an der axialen Position des Auslasses angeordnet ist.

3. Brennstoffsystem nach Anspruch 2, wobei die Gasabscheidungspumpe (20) ferner ein drittes Flügelrad (120) an einer axialen Position zwischen dem Einlass und dem ersten Ende des zylindrischen Innenhohlraums umfasst.

4. Brennstoffsystem nach einem der vorstehenden Ansprüche, wobei die Vakuumverbindung an einem zweiten Ende des zylindrischen Innenhohlraums näher an der axialen Position des Auslasses als an der axialen Position des Fluideinlasses angeordnet ist.

5. Brennstoffsystem nach einem der vorstehenden Ansprüche, ferner umfassend eine Vakuumvorrichtung (136) in Fluidverbindung mit der Vakuumverbindung, entweder in die Gasabscheidungspumpe integriert oder außerhalb davon, an einem gemeinsamen Rotor mit dem ersten und zweiten Flügelrad.

6. Brennstoffsystem nach Anspruch 5, wobei die Vakuumvorrichtung einen Vakuumejektor (136) in Fluidverbindung mit der Vakuumverbindung umfasst.

7. Brennstoffsystem nach einem der vorstehenden Ansprüche, wobei der Gasabscheidungspumpeneinlass ferner eine Öffnung oder ein Venturi-Rohr (108) umfasst.

8. Brennstoffsystem nach einem der vorstehenden Ansprüche, ferner umfassend eine Inertgasquelle in Fluidverbindung mit einem Leerraum (16) in dem Brennstofftank.

9. Brennstoffsystem nach Anspruch 8, wobei die Inertgasquelle einen katalytischen Reaktor umfasst, der Brennstoffdampf verbrennt, um Kohlenstoffdioxid und Wasser zu bilden.

10. Brennstoffsystem nach einem der vorstehenden Ansprüche, wobei das Brennstoffsystem dazu konfiguriert ist, einen Vakuumdruck an der Vakuumverbindung auf Grundlage der Temperatur des flüssigen Kohlenwasserstoffbrennstoffs zu steuern.

11. Motorbetankungssystem, umfassend das Brennstoffsystem (10) nach einem der vorstehenden Ansprüche und einen Motor (42), der Brennstoff aus dem Kohlenwasserstoffbrennstoff-Strömungspfad aufnimmt.

12. Motorbetankungssystem nach Anspruch 11, ferner umfassend eine Absaugpumpe (32) an dem Kohlenwasserstofffluid-Strömungspfad zwischen dem Brennstofftank und dem Gasabscheidungspumpeneinlass, wobei eine Brennstoffstromausgabe aus der Gasabscheidungspumpe oder einer Speisepumpe eine Antriebskraft für die Absaugpumpe bereitstellt.

13. Motorbetankungssystem nach Anspruch 12, wobei das Wärmemanagementsystem ein Wärmetauscher (36) ist, der eine Wärmeabsorptionsseite an dem Kohlenwasserstoffbrennstoff-Strömungspfad und eine Wärmeabgabeseite in thermischer Verbindung mit einer Wärmequelle umfasst.

14. Motorbetankungssystem nach Anspruch 13, wobei der Motor einen Gasturbinenflugzeugmotor umfasst und die Wärmequelle ein Motorschmieröl umfasst.

## Revendications

1. Système de carburant (10) comprenant
un réservoir de carburant (12) contenant du carburant d'hydrocarbure (14) ;
un trajet d'écoulement de carburant d'hydrocarbure en communication fluidique avec le réservoir de carburant ;
une pompe de séparation de gaz (20) disposée sur le trajet d'écoulement, comprenant :
un carter de pompe (102) comprenant une paroi interne définissant une cavité interne cylindrique, ledit carter de pompe comprenant une entrée (104) au niveau d'une première position axiale le long de la circonférence externe de cavité cylindrique, une sortie (106) au niveau d'une seconde position axiale le long de la circonférence externe de cavité cylindrique et une connexion à vide (112) en communication fluidique avec l'axe de cavité cylindrique ;
une première roue (110) disposée axialement entre l'entrée et la sortie, ladite première roue comprenant un bord externe configuré pour balayer le long de la paroi interne ;
une deuxième roue (118) disposée axialement entre la première roue et la sortie, ladite deuxième roue étant configurée pour éjecter du liquide à travers la sortie de fluide ; et **caractérisé par**
un système de gestion thermique (24, 36) configuré pour chauffer le carburant ;
une sortie de distribution de système de carburant (22) configurée pour recevoir un carburant dégazé à partir de la pompe de séparation de gaz et le délivrer au système de gestion thermique ;
la paroi interne comportant une pluralité de caractéristiques de surface irrégulières ;
le bord externe de la première roue comportant une pluralité de structures droites en forme de nervure avec des arêtes vives ayant un motif d'encoche rectangulaire dans une section transversale axiale, et
la pluralité de structures en forme de nervure étant reçue dans les caractéristiques de surface irrégulières de la paroi interne.

2. Système de carburant selon la revendication 1, dans lequel la connexion à vide (112) est disposée à un emplacement radialement central le long d'une première extrémité de la cavité cylindrique interne plus proche de la position axiale de l'entrée que de la position axiale de la sortie.

3. Système de carburant selon la revendication 2, dans lequel la pompe de séparation de gaz (20) comprend en outre une troisième roue (120) au niveau d'une position axiale entre l'entrée et la première extrémité de la cavité cylindrique interne.

4. Système de carburant selon une quelconque revendication précédente, dans lequel la connexion à vide est disposée au niveau d'une seconde extrémité de la cavité cylindrique interne plus proche de la position axiale de la sortie que de la position axiale de l'entrée de fluide.

5. Système de carburant selon une quelconque revendication précédente, comprenant en outre un dispositif à vide (136) en communication fluidique avec la connexion à vide, soit intégré à ou externe à la pompe de séparation de gaz, sur un rotor commun avec les première et deuxième roues.

6. Système de carburant selon la revendication 5, dans lequel le dispositif à vide comprend un éjecteur à vide (136) en communication fluidique avec la connexion à vide.

7. Système de carburant selon une quelconque revendication précédente, dans lequel l'entrée de pompe de séparation de gaz comprend en outre un orifice ou un tube Venturi (108).

8. Système de carburant selon une quelconque revendication précédente, comprenant en outre une source de gaz inerte en communication fluidique avec un espace vide (16) dans le réservoir de carburant.

9. Système de carburant selon la revendication 8, dans lequel la source de gaz inerte comprend un réacteur catalytique qui brûle la vapeur de carburant pour former du dioxyde de carbone et de l'eau.

10. Système de carburant selon une quelconque revendication précédente, dans lequel le système de carburant est configuré pour commander une pression de vide au niveau de la connexion à vide sur la base de la température du carburant d'hydrocarbure liquide.

11. Système d'alimentation en carburant de moteur comprenant le système de carburant (10) selon une quelconque revendication précédente et un moteur (42) qui reçoit le carburant du trajet d'écoulement de carburant d'hydrocarbure.

12. Système d'alimentation en carburant de moteur selon la revendication 11, comprenant en outre une pompe de récupération (32) sur le trajet d'écoulement de fluide d'hydrocarbure entre le réservoir de carburant et l'entrée de pompe de séparation de gaz, dans lequel le débit de carburant sortant de la pompe de séparation de gaz ou d'une pompe de suralimentation fournit une force motrice à la pompe de récupération.

13. Système d'alimentation en carburant de moteur selon la revendication 12, dans lequel le système de gestion thermique est un échangeur de chaleur (36) comprenant un côté d'absorption de chaleur sur le trajet d'écoulement de carburant d'hydrocarbure et un côté de rejet de chaleur en communication thermique avec une source de chaleur.

14. Système d'alimentation en carburant de moteur selon la revendication 13, dans lequel le moteur comprend un moteur d'aéronef à turbine à gaz, et la source de chaleur comprend de l'huile de lubrifiante pour moteur.
